# EUROPEAN PATENT SPECIFICATION

(11) **EP 2 732 257 B1**
(45) Date of publication and mention of the grant of the patent: **31.10.2018**
(21) Application number: 12734934.8
(22) Date of filing: 10.07.2012
(51) Int. Cl.: G01B 7/14, G01M 5/00

(54) **MONITORING SYSTEM FOR DAMAGE TO STRUCTURES AND BUILDINGS**
ÜBERWACHUNGSSYSTEM FÜR SCHÄDEN AN STRUKTUREN UND GEBÄUDEN
SYSTÈME DE SURVEILLANCE DES DOMMAGES CAUSÉS À DES STRUCTURES ET À DES BÂTIMENTS

(30) Priority: 12.07.2011 IT VR20110143
(43) Date of publication of application: 21.05.2014
(73) Proprietor: THUR S.R.L., 37122 Verona (IT)
(72) Inventor: BIRTELE, Andrea, I-37138 Verona (IT)
(74) Representative: Modiano, Micaela Nadia
(86) International application number: PCT/EP2012/063474
(87) International publication number: WO 2013/007720

(56) References cited:
- WO-A1-2006/120435
- FR-A1- 2 931 545
- US-A- 5 430 953

## Description

The present invention relates to a monitoring system for damage to structures and buildings.

As is known, the monitoring of damage to masonry systems and structural elements in general makes it possible to establish the evolution of the relative displacements of the structures over time, i.e., the differential failures of the foundation structures, as a direct consequence of exceeding the strength limit tolerated by the masonry.

The simplest background art for monitoring the relative displacements of damaged masonry is performed by rigidly connecting a glass element so as to straddle the damage; any displacements entail breaking the glass element, indicating that the limbs of the structure have moved.

One drawback of this technique is the fact that the background art does not provide information regarding the extent of the displacement. A further drawback consists in the fact that the known monitoring system cannot be used once the condition of breakage of the glass element has been reached.

A known alternative to the described monitoring system consists in using monitoring systems, called crackmeters, composed of two distinct elements to be connected rigidly to the masonry, at a damaged area, each one on a limb of said damaged area; one element bears an imprinted millimeter grid along two mutually perpendicular directions which lie on the masonry plane and on the other element there is a crosshair that allows the detection and quantification of the displacements. One drawback of this known background art is the need to read the displacements manually. A further drawback is the possibility of making mistakes in reading the displacements.

A known alternative to the two monitoring systems described above consists in using electronic crackmeters constituted by a single-axis mechanical potentiometric transducer connected to a control unit for automatic data reading and acquisition. Even these known systems are not free from drawbacks, including the need for professional installation, the limitation in detecting displacement exclusively along a single direction, the high cost, the wired connection between the transducer and the data reading and acquisition control unit and the significant size of this monitoring system.

Furthermore the document WO2006/120435 A1 discloses a system for monitoring an existing building crack using an inductance based sensing arrangement for detecting displacements in two perpendicular directions.

The aim of the present invention is to eliminate the drawbacks illustrated above in known types of systems for monitoring cracks by devising a system that allows automatic and accurate monitoring of the displacements.

Within this aim, an object of the invention is to provide a system that allows detection of displacements along a plurality of directions at right angles to each other, with high precision, merely by way of example even higher than 0.5 mm.

Another object of the invention is to provide a system that is easy to apply both outdoors and indoors.

A further object of the invention is to provide a crack monitoring system that ensures a long operating life and the possibility of sending warning messages in case of excessive displacements or malfunction.

Yet another object of the invention is to provide a system that makes it possible to program the reading and acquisition of displacement data as well as their filing or forwarding to adapted Web sites, which can be consulted directly by the user remotely.

An object of the invention is, moreover, to provide a system provided with a variable range of measurement of the displacement.

Another object of the invention is to provide a system that has extremely reduced dimensions and a limited aesthetic impact.

A further object of the invention is to devise a system that allows, if a significant increase in the dimensions of the cracks is detected, continuing to monitor the progress of the crack without the need to change the crackmeter as in known systems.

Another object of the present invention is to provide a system that allows measuring, substantially in the same point of the crack, the displacement along two substantially perpendicular directions.

This aim and these and other objects that will become more apparent hereinafter are achieved by a monitoring system for damage to structures and buildings according to what is provided in the subsequent claim 1.

Further characteristics and advantages of the invention will become more apparent from the description of some preferred but not exclusive embodiments of the monitoring system according to the invention, illustrated by way of non-limiting example in the accompanying drawings, wherein:
Figure 1 is an explanatory diagram of an example of configuration of the monitoring system according to the invention;
Figure 2 is a schematic plan view of the apparatus for measuring cracks that is part of the monitoring system of the present invention;
Figure 3 is a schematic plan view of the apparatus for measuring cracks;
Figure 4 is a partially sectional lateral elevation view of the apparatus illustrated in Figure 3;
Figure 5 is a partially sectional front elevation view of the apparatus illustrated in Figure 3;
Figure 6 is a partially sectional plan view of a constructive variation of the apparatus for measuring cracks between masonry elements arranged mutually at right angles;
Figure 7 is a partially sectional lateral elevation view of the apparatus shown in Figure 6.

In the description that follows, as well as in the drawings, identical reference numerals correspond to identical elements.

With reference to the cited figures, the monitoring system according to the invention, generally designated by the reference numeral 1, comprises at least one apparatus 2a for measuring cracks, which is fixed to a structure 3a to be monitored, and a control server 4.

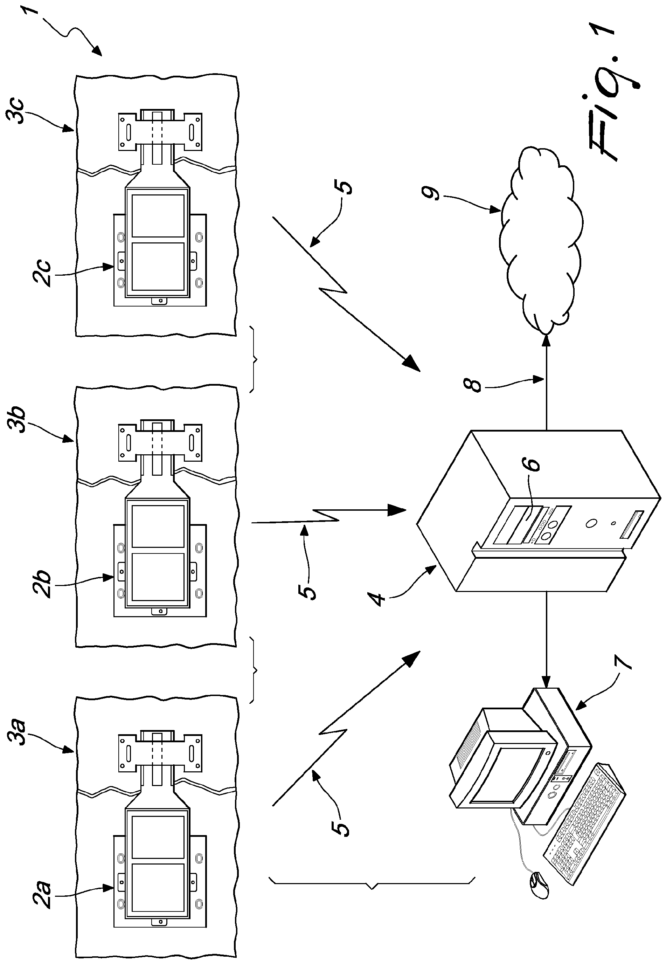

By way of example, Figure 1 illustrates three apparatuses 2a, 2b, 2c, which are fixed to three different structures or portions of structure 3a, 3b, 3c to be monitored. Each apparatus 2a, 2b, 2c has means 5 for communication, for example for wireless communication according to the ZigBee standard, with the control server 4.

The control server 4, which can be supplied with power over the electrical grid or for example by means of solar panels, has a user interface 6 for the management and control of the monitoring system 1.

The control server 4 is provided, moreover, with means for storing data, for example by means of digital memory; these data can be consulted directly by the user, by means of the user interface 6, or downloaded onto a personal computer 7.

The control server 4 also has means 8 for transmitting data, for example by means of the GSM protocol, to a website 9, which can be browsed directly by the user remotely.

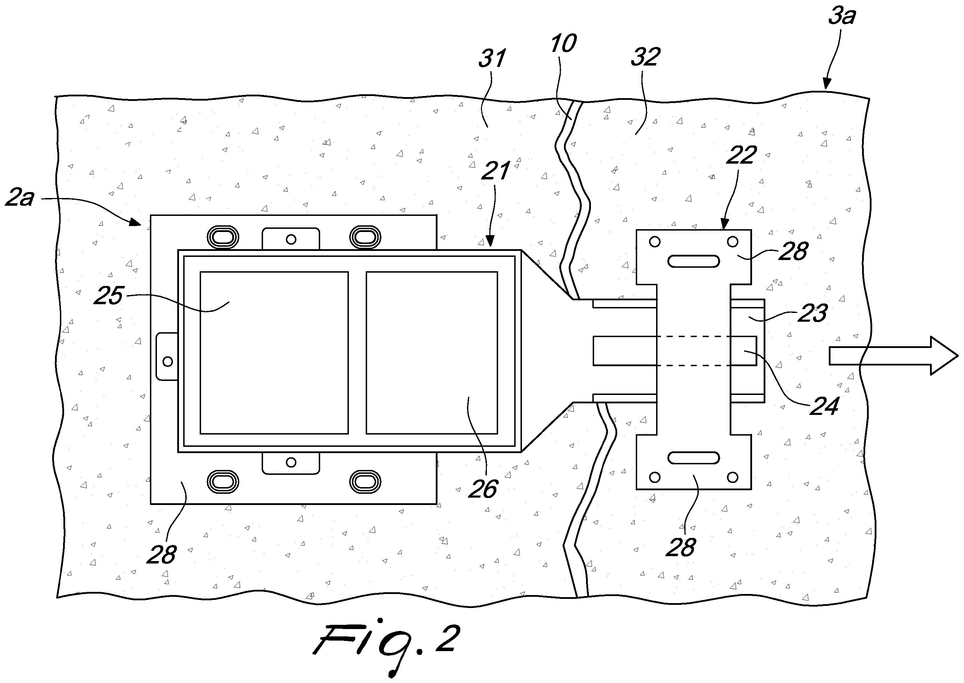

Figure 2 is a view of the apparatus 2a for measuring cracks. Said apparatus 2a is designed to be fixed to a structure 3a of which one wishes to monitor the progress of a crack 10. The crack 10 defines two limbs 31 and 32 of the structure 3a to be monitored.

The apparatus 2a comprises a first fixed element 21, which is integral with the limb 31 of the structure 3a, and a second fixed element 22, which is integral with the limb 32 of the structure 3a.

The portion 23 of the first fixed element 21 that engages the second fixed element 22 so as to straddle the crack 10 has a sensor 24 for measuring the displacement between the two limbs 31 and 32 of the structure 3a.

The first fixed element 21 accommodates an electronic board 25 for acquisition and transmission of data and a battery system 26 for supplying power to the electronic board 25.

The apparatus 2 is provided with plates 28 for fixing to the structure 3a to be monitored.

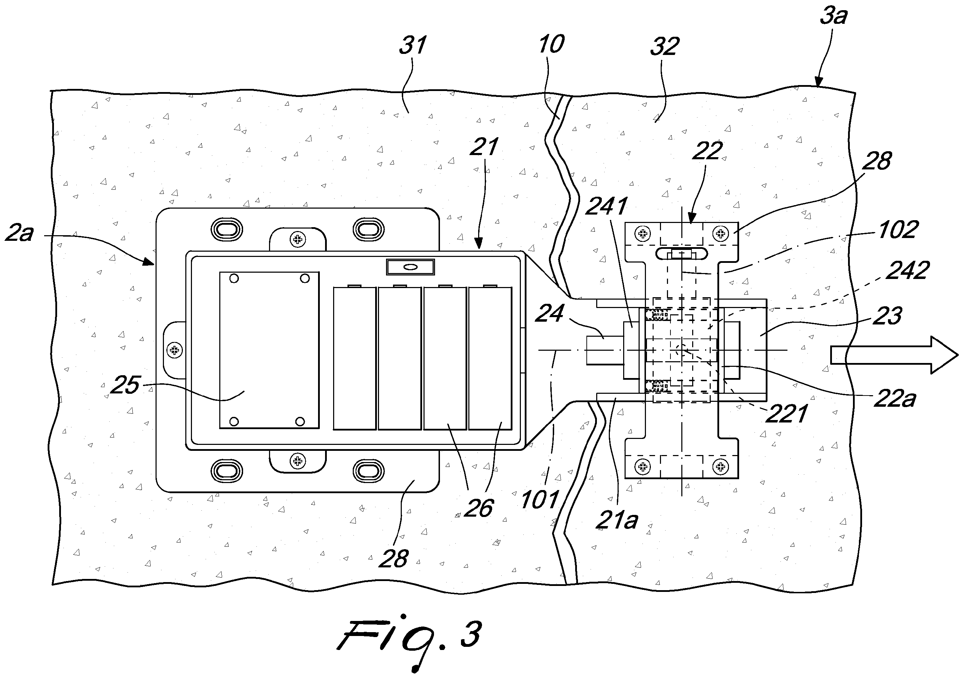

Figure 3 is a schematic view of the portion 23 of the apparatus 2a that contains the sensor 24 for measuring the displacement.

Said sensor 24 is composed of a first linear potentiometric membrane 241, which cooperates with a respective first slider 221 to detect the relative displacement between the first fixed element 21 and the second fixed element 22 along at least one first detection direction 101.

In particular, the first potentiometric membrane 241 is supported by the first fixed element 21, whereas the respective first slider 221 is supported by the second fixed element 22.

Conveniently, the first potentiometric membrane 241 is linear, i.e., extends along the detection direction 101.

It is possible, moreover, to provide, if one wishes to monitor the relative rotation between the two limbs 31 and 32 of the crack 10, for example around the fulcrum, for the use of a potentiometric membrane 241 arranged along a circular arc which is centered substantially at the fulcrum of the crack 10. This option is not an embodiment of the present invention.

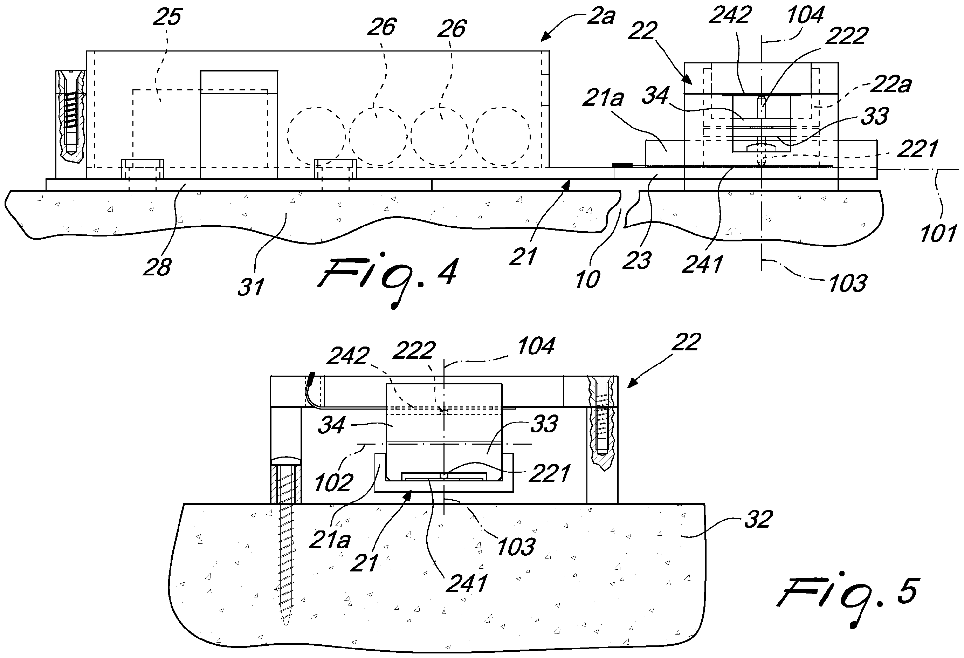

According to a preferred embodiment illustrated in Figures 3 to 7, the monitoring system 1 according to the invention comprises a second linear potentiometric membrane 242, which is supported by the second fixed element and cooperates with a respective second slider 222 to detect the relative displacement between the first fixed element 21 and the second fixed element 22 along a second detection direction 102, which is substantially perpendicular to the first detection direction 101.

Advantageously, the first slider 221 is supported so that it can rotate about a first pivoting axis 103, which is substantially perpendicular to the plane of arrangement of the first potentiometric membrane 241, by the second fixed element and is guided slidingly along a first sliding guide 21a, which is defined on the first fixed element 21 and is substantially parallel to the first detection direction 101.

If there is the second potentiometric membrane 242, the second slider 222 is supported, so that it can rotate about a second pivoting axis 104, which is substantially parallel to the first pivoting axis 103, by the first fixed element 21 and is guided slidingly along a second sliding guide 22a, which is defined on the second fixed element 22 and is substantially parallel to the second detection direction 102.

In order to allow detection, in the same point along the crack 10, of the displacement along two mutually perpendicular directions, the first linear potentiometric membrane 241 is at least partially superimposed on the second linear potentiometric membrane 242.

Advantageously, in this case the first pivoting axis 103 coincides with the second pivoting axis 104 and respective mutually pivoted supporting blocks 33 and 34 are provided for the first slider 221 and for the second slider 222.

Conveniently, the linear potentiometric membrane 241 is arranged so as to be substantially at right angles to the crack 10, while the linear potentiometric membrane 242 is arranged substantially parallel to the crack 10 and in any case at right angles to the membrane 241.

Depending on the extent of the displacements expected between the limbs 31 and 32 of the structure, the invention provides for the possibility of inserting linear potentiometric membranes 241 and 242 of various lengths. In this manner it is possible to modify, for example increase, the displacement measurement range.

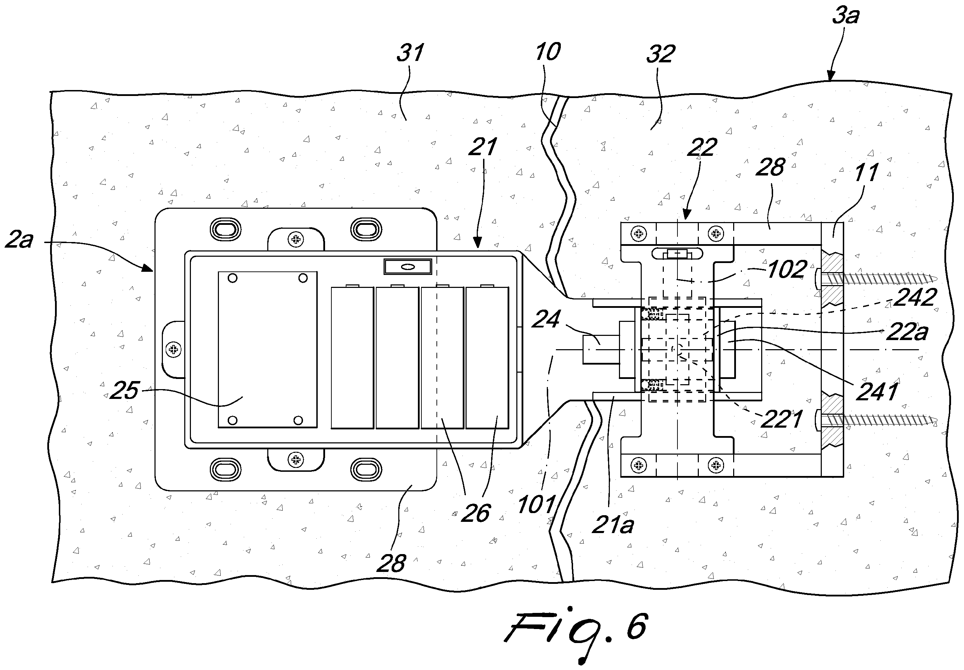

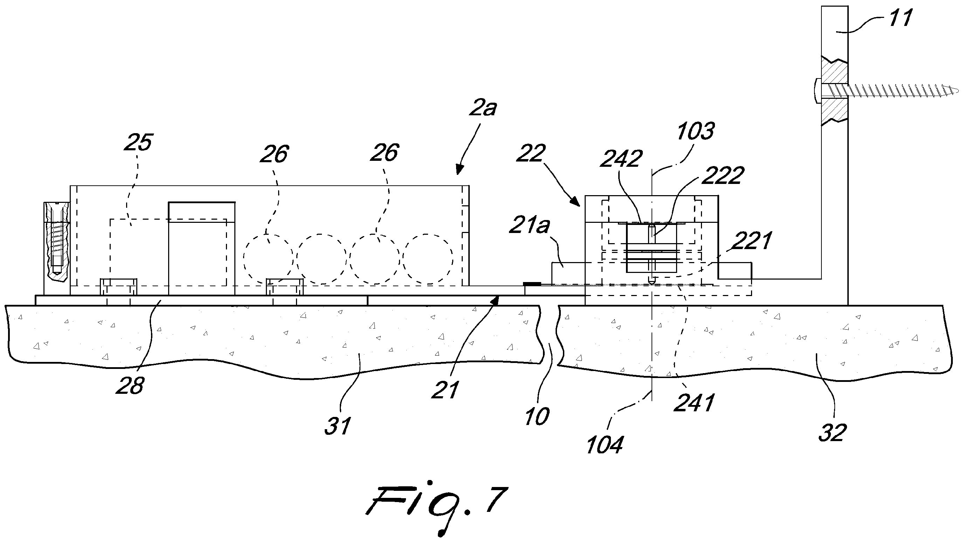

Figures 6 and 7 illustrate the apparatus 2a according to a second embodiment of the invention, in which the second fixed element 22 of the structure 2a is fixed to a limb 32 of the structure 3a, at right angles to the limb 31 of the structure 3a, by means of a conveniently shaped connecting bracket 11.

The operation of the monitoring system according the invention is as follows.

The relative displacement of the limbs 31 and 32 of a structure 3a affected by a crack 10, which occurs on the plane of said structure, entails a relative displacement, on the plane, also of the two fixed elements 21 and 22 of the measuring apparatus 2a, which are integrally connected respectively to the mobile limbs 31 and 32.

This relative displacement on the plane determines a sliding of the slider 221 with respect to the linear potentiometric membrane 241 that is substantially equal to the displacement between the limbs 31 and 32 in a direction substantially at right angles to the crack 10 and optionally a sliding of the slider 222 with respect to the linear potentiometric membrane 242 that is substantially equal to the displacement between the limbs 31 and 32 in a direction which is substantially parallel to the crack 10.

These displacements of the sliders with respect to the corresponding membranes involve modifications of the electrical contacts, particularly variations of impedance, that are proportional to the extent of the displacement itself.

These displacement values are acquired and transmitted, for example by means for wireless communication via a ZigBee transmission protocol, to a control server 4, from which is possible to manage the monitoring system in order to modify the data acquisition protocol, store the data and download them later, transmit the data to a website to be browsed remotely, and optionally send warning messages in case of excessive displacements or malfunction.

The monitoring system thus conceived is susceptible of numerous modifications and variations, all of which are within the scope of the inventive concept; all the details may furthermore be replaced with other technically equivalent elements.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A monitoring system (1) for damage to structures and buildings, comprising at least one apparatus (2a, 2b, 2c) for measuring cracks (10) of a structure (3a), said apparatus (2a) comprising a first fixed element (21), which is integral with a structure (3a) at a first limb (31) of the crack (10), and a second fixed element (22), which is integral with said structure (3a) at a second limb (32) of the crack (10), which is opposite with respect to said first limb (31), said first fixed element (21) having a portion (23) that is adapted to engage said second fixed element (22) so as to straddle the crack (10), said monitoring system further comprising:
- a first linear potentiometric membrane (241), which cooperates with a respective first slider (221) to detect the relative displacement between said first fixed element (21) and said second fixed element (22) along at least one first detection direction (101).
- said first potentiometric membrane (241) being supported by said first fixed element (21) and said respective first slider (221) being supported by said second fixed element (22),
- said first slider (221) being in electrical sliding contact with said first potentiometric membrane (241),
- a second linear potentiometric membrane (242), which cooperates with a respective second slider (222) to detect the relative displacement between said first fixed element (21) and said second fixed element (22) along a second detection direction (102), which is substantially perpendicular to said first detection direction (101);
- wherein said second potentiometric membrane (242) is supported by said second fixed element (22) and said respective second slider (222) is supported by said first fixed element (21),
- said second slider (222) being in electrical sliding contact with said second potentiometric membrane (242), and
- wherein said first linear potentiometric membrane (241) is partially superimposed on said second linear potentiometric membrane (242).

2. The monitoring system (1) according to one or more of the preceding claims, **characterized in that** said first slider (221) is supported, so that it can rotate about a first pivoting axis (103) which is substantially perpendicular to the plane of arrangement of said first potentiometric membrane (241), by said second fixed element (22) and is guided slidingly along a first sliding guide (21a), which is defined on said first fixed element (21) and is substantially parallel to said first detection direction (101).

3. The monitoring system (1) according to one or more of the preceding claims, **characterized in that** said second slider (222) is supported, so that it can rotate about a second pivoting axis (104) which is substantially parallel to said first pivoting axis (103), by said first fixed element (21) and is guided slidingly along a second sliding guide (22a), which is defined on said second fixed element (22) and is substantially parallel to said second detection direction (102).

4. The monitoring system (1) according to claim 3, **characterized in that** said first pivoting axis (103) coincides with said second pivoting axis (104).

5. The monitoring system (1) according to claim 1, **characterized in that** said first and second fixed elements (21, 22) comprise plates (28) for fixing to the structure (3a).

6. The monitoring system (1) according to claim 1, **characterized in that** it comprises means (5) for communicating with a control server (4).

7. The monitoring system (1) according to claim 1, **characterized in that** it comprises a user interface (6) of the touch-screen type.

8. The monitoring system (1) according to claim 1, **characterized in that** it is provided with data storage means for deferred download.

9. The monitoring system according to claim 1, **characterized in that** it comprises means (8) for transmitting data to a Web site (9).

## Patentansprüche

1. Überwachungssystem (1) für Schäden an Bauwerken und Gebäuden, umfassend mindestens eine Vorrichtung (2a, 2b, 2c) zum Messen von Rissen (10) einer Struktur (3a), wobei die Vorrichtung (2a) ein erstes befestigtes Element (21), das mit einer Struktur (3a) an einem ersten Schenkel (31) des Risses (10) verbunden ist, und ein zweites befestigtes Element (22) umfasst, das mit der genannten Struktur (3a) an einem zweiten Schenkel (32) des Risses (10) verbunden ist, der in Bezug auf den genannten ersten Schenkel (31) entgegengesetzt ist, wobei das genannte erste befestigte Element (21) einen Abschnitt (23) aufweist, der mit dem genannten zweiten befestigten Element (22) in Eingriff gebracht werden kann, um so den Riss (10) zu überbrücken, welches Überwachungssystem ferner umfasst:
- eine erste lineare potentiometrische Membran (241), die mit einem jeweiligen ersten Schieber (221) zusammenwirkt, um die relative Verschiebung zwischen dem genannten ersten befestigten Element (21) und dem genannten zweiten befestigten Element (22) entlang mindestens einer ersten Erfassungsrichtung (101) zu ermitteln,
- welche genannte erste potentiometrische Membran (241) von dem genannten ersten befestigten Element (21) getragen wird und welcher genannte jeweilige erste Schieber (221) von dem genannten zweiten befestigten Element (22) getragen wird,
- welcher genannte erste Schieber (221) in elektrischem Gleitkontakt mit der genannten ersten potentiometrischen Membran (241) steht,
- eine zweite lineare potentiometrische Membran (242), die mit einem jeweiligen zweiten Schieber (222) zusammenwirkt, um die relative Verschiebung zwischen dem genannten ersten befestigten Element (21) und dem genannten zweiten befestigten Element (22) entlang einer zweiten Erfassungsrichtung (102), die im Wesentlichen senkrecht zur genannten ersten Erfassungsrichtung (101) ist, zu ermitteln,
- welche genannte zweite potentiometrische Membran (242) von dem genannten zweiten befestigten Element (22) getragen wird und welcher genannte jeweilige zweite Schieber (222) von dem genannten ersten befestigten Element (21) getragen wird,
- welcher genannte zweite Schieber (222) in elektrischem Gleitkontakt mit der genannten zweiten potentiometrischen Membran (242) steht, und
- wobei die genannte erste lineare potentiometrische Membran (241) die genannte zweite lineare potentiometrische Membran (242) teilweise überlagert.

2. Überwachungssystem (1) nach einem oder mehreren der vorstehenden Ansprüche, **dadurch gekennzeichnet, dass** der genannte erste Schieber (221) so gelagert ist, dass er sich um eine erste Schwenkachse (103) drehen kann, die im Wesentlichen senkrecht zu der Anordnungsebene der genannten ersten potentiometrischen Membran (241) ist, durch das genannte zweite befestigte Element (22) und gleitend entlang einer ersten Gleitführung (21a) geführt wird, die an dem genannten ersten befestigten Element (21) definiert ist und im Wesentlichen parallel zu der genannten ersten Erfassungsrichtung (101) ist.

3. Überwachungssystem (1) nach einem oder mehreren der vorhergehenden Ansprüche, **dadurch gekennzeichnet, dass** der genannte zweite Schieber (222) so gelagert ist, dass er sich um eine zweite Schwenkachse (104) drehen kann, die im Wesentlichen parallel zu der genannten ersten Schwenkachse (103) ist, durch das genannte erste befestigte Element (21) und gleitend entlang einer zweiten Gleitführung (22a) geführt wird, die an dem genannten zweiten befestigten Element (22) definiert ist und im Wesentlichen parallel zu der genannten zweiten Erfassungsrichtung (102) ist.

4. Überwachungssystem (1) nach Anspruch 3, **dadurch gekennzeichnet, dass** die genannte erste Schwenkachse (103) mit der genannten zweiten Schwenkachse (104) zusammenfällt.

5. Überwachungssystem (1) nach Anspruch 1, **dadurch gekennzeichnet, dass** das erste und das zweite befestigte Element (21, 22) Platten (28) zum Befestigen an der Struktur (3a) umfassen.

6. Überwachungssystem (1) nach Anspruch 1, **dadurch gekennzeichnet, dass** es Mittel (5) zum Kommunizieren mit einem Steuerungs-Server (4) umfasst.

7. Überwachungssystem (1) nach Anspruch 1, **dadurch gekennzeichnet, dass** es eine Benutzerschnittstelle (6) vom eines Typ eines Berührungsbildschirms umfasst.

8. Überwachungssystem (1) nach Anspruch 1, **dadurch gekennzeichnet, dass** es mit Datenspeichermitteln zum verzögerten Herunterladen versehen ist.

9. Überwachungssystem nach Anspruch 1, **dadurch gekennzeichnet, dass** es Mittel (8) zum Übertragen von Daten zu einer Website (9) umfasst.

## Revendications

1. Système de surveillance (1) de l'endommagement de structures et de bâtiments, comportant au moins un appareil (2a, 2b, 2c) pour mesurer des fissures (10) d'une structure (3a), ledit appareil (2a) comportant un premier élément fixe (21), qui est solidaire d'une structure (3a) sur une première partie (31) de la fissure (10) et un second élément fixe (22), qui est solidaire de ladite structure (3a) sur une seconde partie (32) de la fissure (10), qui est opposée par rapport à ladite première partie (31), ledit premier élément fixe (21) ayant une portion (23) qui est adaptée pour engager ledit second élément fixe (22) de manière à chevaucher la fissure (10), ledit système de surveillance comportant en outre :
- une première membrane potentiométrique linéaire (241), qui coopère avec un premier coulisseau (221) respectif pour détecter le déplacement relatif entre ledit premier élément fixe (21) et ledit second élément fixe (22) le long d'au moins une première direction de détection (101),
- ladite première membrane potentiométrique (241) étant supportée par ledit premier élément fixe (21) et ledit premier coulisseau (221) respectif étant supporté par ledit second élément fixe (22),
- ledit premier coulisseau (221) étant en contact électrique glissant avec ladite première membrane potentiométrique (241),
- une seconde membrane potentiométrique linéaire (242), qui coopère avec un second coulisseau (222) respectif pour détecter le déplacement relatif entre ledit premier élément fixe (21) et ledit second élément fixe (22) le long d'une seconde direction de détection (102), qui est sensiblement perpendiculaire à ladite première direction de détection (101),
- dans lequel ladite seconde membrane potentiométrique (242) est supportée par ledit second élément fixe (22) et ledit second coulisseau (222) respectif est supporté par ledit premier élément fixe (21),
- ledit second coulisseau (222) étant en contact électrique glissant avec ladite seconde membrane potentiométrique (242), et
- dans lequel ladite première membrane potentiométrique linéaire (241) est en partie superposée à ladite seconde membrane potentiométrique linéaire (242).

2. Système de surveillance (1) selon une ou plusieurs des revendications précédentes, **caractérisé en ce que** ledit premier coulisseau (221) est supporté, de sorte qu'il peut tourner autour d'un premier axe de pivotement (103) qui est sensiblement perpendiculaire au plan d'agencement de ladite première membrane potentiométrique (241), par l'intermédiaire dudit second élément fixe (22) et est guidé de façon coulissante le long d'un premier guide de coulissement (21a), qui est défini sur ledit premier élément fixe (21) et est sensiblement parallèle à ladite première direction de détection (101).

3. Système de surveillance (1) selon une ou plusieurs des revendications précédentes, **caractérisé en ce que** ledit second coulisseau (222) est supporté, de sorte qu'il peut tourner autour d'un second axe de pivotement (104) qui est sensiblement parallèle audit premier axe de pivotement (103), par l'intermédiaire dudit premier élément fixe (21) et est guidé de manière coulissante le long d'un second guide de coulissement (22a), qui est défini sur ledit second élément fixe (22) et est sensiblement parallèle à ladite seconde direction de détection (102).

4. Système de surveillance (1) selon la revendication 3, **caractérisé en ce que** ledit premier axe de pivotement (103) coïncide avec ledit second axe de pivotement (104).

5. Système de surveillance (1) selon la revendication 1, **caractérisé en ce que** lesdits premier et second éléments fixes (21, 22) comportent des plaques (28) de fixation à la structure (3a).

6. Système de surveillance (1) selon la revendication 1, **caractérisé en ce qu'**il comporte des moyens (5) pour communiquer avec un serveur de commande (4).

7. Système de surveillance (1) selon la revendication 1, **caractérisé en ce qu'**il comporte une interface utilisateur (6) du type écran tactile.

8. Système de surveillance (1) selon la revendication 1, **caractérisé en ce qu'**il est pourvu de moyens de stockage de données à téléchargement différé.

9. Système de surveillance selon la revendication 1, **caractérisé en ce qu'**il comporte des moyens (8) pour transmettre des données à un site web (9).
